# EUROPEAN PATENT SPECIFICATION

(11) **EP 1 912 437 B1**
(45) Date of publication and mention of the grant of the patent: **30.08.2017**
(21) Application number: 06768080.1
(22) Date of filing: 11.07.2006
(51) Int. Cl.: H04N 5/76, G06F 17/30, H04N 5/00, H04N 5/765, H04N 7/173

(54) **REMOTE CONTROL SYSTEM, REMOTE CONTROLLER, AND REMOTE CONTROL METHOD**
FERNSTEUERSYSTEM, FERNSTEUERUNG UND FERNSTEUERVERFAHREN
SYSTEME DE CONTROLE A DISTANCE, CONTROLEUR A DISTANCE ET METHODE DE CONTROLE A DISTANCE

(30) Priority: 29.07.2005 JP 2005221424
(43) Date of publication of application: 16.04.2008
(73) Proprietor: Sony Corporation, Tokyo (JP)
(72) Inventor: MATSUO, Takashi c/o SONY CORPORATION, Tokyo (JP)
(74) Representative: Delumeau, François Guy
(86) International application number: PCT/JP2006/313767
(87) International publication number: WO 2007/013294

(56) References cited:
- EP-A- 1 465 421
- WO-A-02/052540
- WO-A-02/085004
- JP-A- 11 225 294
- JP-A- 2002 057 949
- JP-A- 2002 057 949
- JP-A- 2002 252 789
- JP-A- 2004 173 004
- JP-A- 2004 173 004
- JP-A- 2004 348 243
- US-A1- 2002 140 571

## Description

### Technical Field

The present invention relates to remote control systems, remote controllers, and remote control methods. For example, the present invention relates to a remote control system, a remote controller, and a remote control method for remote-controlling a broadcast receiver that receives and records broadcast signals.

### Background Art

In existing broadcast receivers, such as video recorders, it has been the case to receive an electronic program guide (EPG) together with broadcast signals and to display the electronic program guide on a display of a television set or the like so that a user can select a desired program for reservation of recording. According to this method of using the electronic program guide, the user has to manually search for a program.

As an approach for facilitating searching of a desired program, techniques have been disclosed in which program identification information of a television program is identified by an IC tag or the like so that a recording reservation can be made easily (e.g., Japanese Unexamined Patent Application Publication No. 2004-173004). However, the techniques simply allow omitting input of keywords for searching. Furthermore, cost is increased since an IC tag is used for each broadcast receiver.

Also, techniques have been put into practice in which a portable terminal, such as a cellular phone, is placed in proximity to an IC tag or IC card embedded in an advertising poster posted at a station or the like, thereby obtaining information relating to the poster, such as a URL, and further processing is executed on the basis of the information (e.g., Japanese Unexamined Patent Application Publication No. 2001-160105). According to the techniques, information embedded in a single IC tag is used by a large number of users, so that operation at a low cost is possible.

For example, techniques have been disclosed in which information embedded in such an advertising poster is first received by wireless and stored in a small device, the small device is moved to a place where a broadcast receiver is disposed, and the information is transmitted from the small device to the broadcast receiver (e.g., Japanese Unexamined Patent Application Publication No. 11-225294). However, at the time of reception by and storage in the small device, it is not possible to check whether the information allows making a recording reservation properly. Thus, when a recording reservation fails, it is not possible to recognize whether the information itself is not correct, the information has not been received properly, or the small device is not working properly. Furthermore, in any of these cases, the user has to visit the place of the advertising poster again in order to obtain the information.

Document JP 2002 057949 A discloses a program reservation system having the above-mentioned problems. Document WO 02/052440 A discloses a handheld program selector.

The present invention has been made in view of the above-described problems relating to remote control of existing broadcast receivers, and it is an object of the present invention to provide a novel and improved remote control system, remote controller, and remote control method with which it is possible to obtain information of a desired broadcast program at an arbitrary place and to check on the spot whether a reservation for the program can be made.

### Disclosure of Invention

The invention is defined in the appended claims.

In order to solve the problems described above, according to an aspect of the present invention, there is provided a remote control system including a broadcast receiver and a remote controller for remote-controlling the broadcast receiver.

In the remote control system, the remote controller obtains data by wireless communications from an electronic device, such as an IC tag or IC card embedded in an advertising poster, and whether reservation of recording can be made, information regarding a program, and so forth are checked on the spot, so that remaining processing is only transfer to the broadcast receiver. That is, a recording reservation is entered at the place of the advertising poster.

For example, when a certain television drama ends and a new television drama starts, the user can obtain a broadcasting time of the new television drama from a poster of the television drama posted in a train and make a reservation for recording the drama by a DVD recorder at home. The data may be obtained from the poster using instruction information such as a URL.

The electronic device may include an electronic communication unit that carries out wireless communications of data, an electronic storage unit that stores data, and a data transmitter that transmits the data stored in the electronic storage unit to the remote controller via the electronic communication unit when the remote controller exists within a communication range of the electronic device.

The electronic device may be an IC tag or IC card of an advertising poster, and the remote controller may be a portable terminal such as a cellular phone. The electronic device starts transmission of data upon detecting the presence of the remote controller within a communication range. The remote controller extracts a desired broadcast program from the data and generates recording data for reservation of recording.

The broadcast receiver may include a recording-data receiver that receives the recording data transmitted from the remote controller, a recording reservation unit that makes a reservation for recording according to the recording data, and a recorder that receives and records broadcast signals according to the reservation for recording.

The broadcast receiver receives broadcast signals, and display the broadcast signals on a display, such as a television set. Furthermore, with the recording reservation unit and the recorder configured as described above, broadcast signals relevant to the recording reservation can be stored in an internal or separate storage medium.

The remote controller may include a program obtaining unit that obtains an electronic program guide, a data obtaining unit that obtains data from a separate electronic device by wireless communications, a recording-data generator that extracts a program matching a program name or keyword included in the obtained data from the electronic program guide and that generates recording data needed for reservation of recording by the broadcast receiver, a recording-data storage unit that stores the recording data, and a recording-data transmitter that transmits the stored recording data to the broadcast receiver. The recording refers to recording of image and sound.

With the program obtaining unit configured as described above, it is possible to search on the spot for a broadcast program relating to data obtained from a separate electronic device, such as an IC tag or IC card of an advertising poster. Thus, it is possible to check on the spot whether reservation for recording of a desired program can be made, so that it is possible to enter a recording reservation quickly, reliably, and efficiently.

Furthermore, with the recording-data storage unit configured to store the recording data generated as described above, it is possible to store recording data as needed. Furthermore, it is possible to transmit stored recording data simultaneously to the broadcast receiver at a different timing.

The program obtaining unit may narrow down a search range from the data obtained by the data obtaining unit and obtain an electronic program guide only within the search range that has been narrowed down.

The remote controller may further include a reporting unit that reports the presence of a matching broadcast program to a user when a broadcast program with a matching keyword or the like exists in the electronic program guide. The reporting unit reports the presence of the matching broadcast program to the user by sound, display, vibration, or the like generated at the remote controller.

With the reporting unit configured as described above, the user can recognize that a desired broadcast program has been extracted on the basis of the data transmitted from the electronic device, so that failure to obtain information can be prevented. More specifically, the user can check at a place of a poster in which the electronic device is embedded whether reservation for recording can be made, and read the information again on the spot when an error occurs in obtaining data. Thus, preparation for reservation of recording can be executed reliably.

The remote controller may further include a display, and a program selector that displays on the display a plurality of program names or a plurality of keywords included in the obtained data so that a user is allowed to select a program name or keyword, and the recording-data generator may generate recording data by extracting a program matching the selected program name or keyword.

With the program selector configured as described above, it is possible to select desired information from a plurality of pieces of information associated with the electronic device. The user may be allowed to select a plurality of program names or keywords.

The program selector may further allow the user to select a program when a plurality of programs have been extracted by the recording-data generator. With the program selector configured as described above, the user is allowed to select a truly desired program. The user may be allowed to select a plurality of programs at this time.

The remote controller may further include a display, and a recording-data selector that displays on the display the recording data stored in the recording-data storage unit so that a user is allowed to select recording data, and the recording-data transmitter may transmit the selected recording data.

With the recording-data selector configured as described above, it is possible to select a program that the user truly wishes to record from the stored recording data, so that unnecessary recording can be avoided.

The separate electronic device may be an IC tag or an IC card.

The wireless communications may be carried out according to the Near Field Communications (NFC) standard. Electronic devices from which data is to be obtained are often exposed to outdoor air, as in the case of an advertising poster, so that contactless wireless communications are effective. The contactless wireless communications can be carried out, for example, according to the Near Field Communication (NFC) standard. Also, various other means of communications may be used. For example, data may be transmitted by wireless or by wire in a contacting manner or in a contactless manner.

Alternatively, the recording data may be transmitted from the remote controller to the broadcast receiver according to IrDA (Infrared Data Association). Also, for example, it is possible to transmit the recording data to a predetermined address as an attachment to an electronic mail by wireless packet communications so that the broadcast receiver can periodically access the address to obtain the recording data. Alternatively, the recording data may be directly transmitted to the broadcast receiver by an electronic mail. Also, various other means of communications may be used. For example, the recording data may be transmitted by wireless or by wire in a contacting manner or in a contactless manner.

In order to solve the problems described earlier, according to another aspect of the present invention, there are also provided a program for causing a computer to function as the electronic device, the remote controller, or the broadcast receiver, and a remote control method for remote-controlling the broadcast receiver.

The remote controller and the broadcast receiver may be constructed together as a single apparatus. The electronic storage unit of the electronic apparatus or the recording-data storage unit of the remote controller may be provided separately and connected via the Internet or the like. The components of the remote controller may be provided in separate devices in a distributed manner.

As described above, according to the present invention, it is possible to obtain information of a desired broadcast program at an arbitrary place and to check and store on the spot whether a reservation for the program can be made, so that it is possible to determine at the time of obtainment of the information that a reservation for recording can be made. Thus, it is possible to avoid an accident in which it is found out at the time of making a reservation for recording that recording is not allowed.

### Brief Description of the Drawings

Fig. 1 is a block diagram schematically showing the configuration of a remote control system according to a first embodiment.
Fig. 2 is a block diagram schematically showing the configuration of the remote control system according to the first embodiment.
Fig. 3 is a block diagram schematically showing the configuration of an electronic device according to a second embodiment.
Fig. 4 is a circuit block diagram schematically showing the configuration of the electronic device according to the second embodiment.
Fig. 5 is a block diagram schematically showing the configuration of a remote controller according to a third embodiment.
Fig. 6 is a circuit block diagram schematically showing the configuration of the remote controller according to the third embodiment.
Fig. 7 is a block diagram schematically showing the configuration of a broadcast receiver according to a fourth embodiment.
Fig. 8 is a circuit block diagram schematically showing the configuration of the broadcast receiver according to the fourth embodiment.
Fig. 9 is a schematic diagram showing a specific example of a remote control system.
Fig. 10 is a diagram for explaining association with an electronic program guide in the remote control system.
Fig. 11A is a diagram showing advertising-poster data owned by the electronic device.
Fig. 11B is a diagram showing recording data generated by the remote controller.
Fig. 12A is a diagram showing another embodiment of advertising-poster data owned by the electronic device.
Fig. 12B is a diagram showing another embodiment of recording data generated by the remote controller.
Fig. 13 is a diagram for explaining association with music information in the remote control system.
Fig, 14A is a diagram showing another embodiment of advertising-poster data owned by the electronic device.
Fig. 14B is a diagram showing another embodiment of music data generated by the remote controller.
Fig. 15 is a flowchart showing the flow of a remote control method.

### Best Mode for Carrying Out the Invention

Now, preferred embodiments of the present invention will be described in detail with reference to the accompanying drawings. In this specification and the drawings, parts having substantially the same functions and configurations are designated by the same numerals, and repeated descriptions thereof are refrained.

For example, when a URL or map information relating to the content of an advertising poster posted at a station or other places is to be obtained, it is possible to download the information in a contactless manner simply by placing a portable terminal, such as a cellular phone, in proximity to an IC tag or an IC card embedded in the poster.

When the advertising poster presents an advertisement of television broadcast programs or similar information, it is convenient if it is possible to identify a program of interest as well as to download such information to the portable terminal. Furthermore, the advertising poster becomes no longer necessary if a reservation for recording a program is made successfully at this time.

The contactless wireless communications described above can be carried out, for example, according to the Near Field Communication (hereinafter abbreviated as NFC) standard. The NFC supports communications within a short range of about 10 cm, so that a high level of security can be achieved, for example, by restricting counterparties of communications by hand actions. Furthermore, the contactless wireless communications described above are effective since advertising posters in which IC tags or IC cards are embedded are often exposed to outdoor air.

### (First Embodiment: Remote Control System)

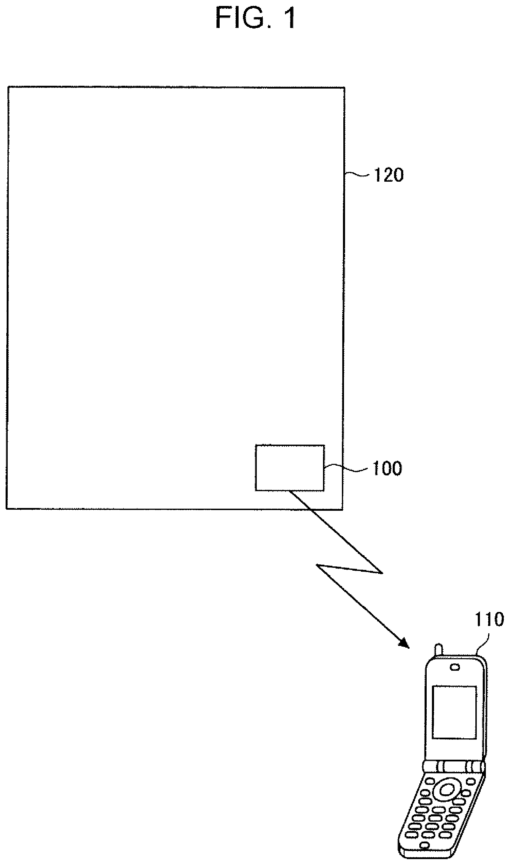

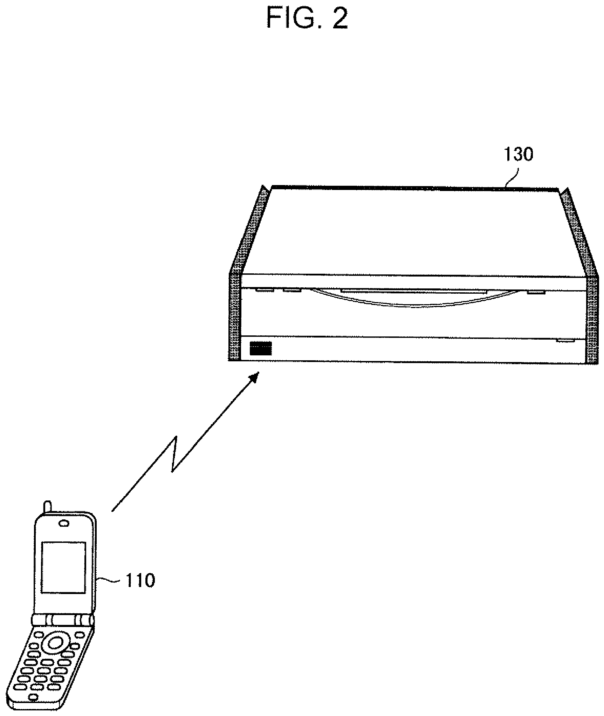

Figs. 1 and 2 are block diagrams schematically showing the configuration of a remote control system according to a first embodiment. Regarding the remote control system, Fig. 1 shows an electronic device 100 storing data, such as data of an advertising poster, and a remote controller 110 for obtaining data from the electronic device 100 by wireless communications, and Fig. 2 shows the remote controller 110 and a broadcast receiver 130 that is remote-controlled using the remote controller 110.

Referring to Fig. 1, the electronic device 100 is provided, for example, on a physical object 120, such as a poster. The physical object 120 may be an object in public space, such as an advertisement, a poster, a bulletin board, or a signboard, and it can be used to convey certain information to a user. An IC tag or an IC card that serves as the electronic device 100 provided on the physical object 120 may receive power from a separate electronic device by radio waves without having a power source of its own.

The electronic device 100 starts sending data automatically or in response to an arbitrary trigger upon detecting the presence of the remote controller 110 within a communication range. The remote controller 110 can obtain the data and directly refer to the data or make a reservation for recording of a program on the basis of the data.

The remote controller 110 is provided separately from the electronic device 100. The remote controller 110 can be implemented as, for example, a cellular phone, a portable game machine, a personal digital assistant (PDA), a mobile personal computer, a watch, a calculator, a mouse, or the like, which can be carried with by a user.

A person in charge of the physical object 120, such as a poster, writes information relating to the content of the poster (program name, broadcasting channel, time of start of broadcasting, length of broadcasting period, time of end of broadcasting, cast, URL, general information, detailed information, map information, charge, date and time, etc.) to an IC tag that serves as the electronic device 100 when or before the poster is put up. When a user becomes interested in the content of the poster, in order to record the content of the poster or to obtain new information, the user places a portable terminal that functions as the remote controller 110 in proximity to the IC tag of the poster, and starts downloading by a simple operation. Alternatively, it is possible to present only instruction information on the poster, such as a URL, so that specific content of the poster can be downloaded from a site represented by the URL.

Upon obtaining the information of the poster as described above, the remote controller 110 displays a message for confirmation of the content, extracts a broadcast program according to the content, and checks whether the program is a program desired by the user. If the user accepts the program, preparation for reservation of recording is automatically executed so that data for reservation of recording (recording data) is stored in the remote controller 110.

Then, as shown in Fig. 2, at a place that is different from the place where the poster is put up, for example, at a house or the like of the user, the recording data is transmitted from the remote controller 110 to the broadcast receiver 130 owned by the user. At this time, it suffices for the user to just perform an operation for sending the recording data stored in the remote controller 110. This is because information that is needed for recording has all been generated at the time of downloading information from the poster. When a plurality of pieces of recording data have been stored in the remote controller 110, however, the user can select a piece of recording data that is to be actually used for reservation of recording.

Now, the electronic device 100, the remote controller 110, and the broadcast receiver 130 in the remote control system will be described in detail.

### (Second Embodiment: Electronic Device 100)

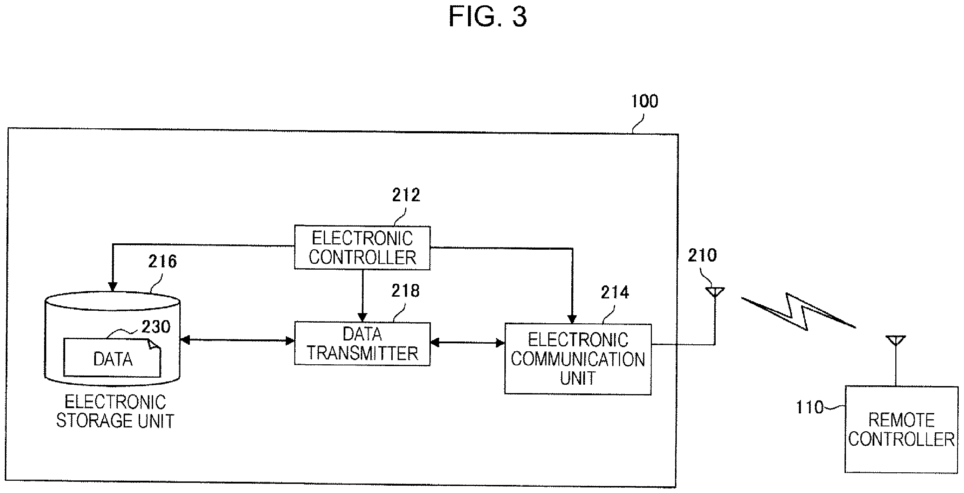

Fig. 3 is a block diagram schematically showing the configuration of the electronic device 100 according to a second embodiment. The electronic device 100 includes an antenna 210, an electronic controller 212, an electronic communication unit 214, an electronic storage unit 216 holding data 230, and a data transmitter 218.

The antenna 210 at least has a communication band in which wireless communications can be carried out according to NFC. The antenna 210 may take the form of a loop antenna.

The electronic controller 212 manages and controls the entire electronic device 100 by a semiconductor integrated circuit including a central processing unit (CPU).

The electronic communication unit 214 carries out wireless data communications with the remote controller 110. The electronic communication unit 214 includes, for example, an RF circuit, a modem circuit, an encoder, a decoder, etc.

The electronic storage unit 216 converts information desired by the user into a data format that allows reference by the user, and stores the resulting data. By referring to the data, the user can obtain program information relating to the content of the advertising poster or a keyword relating to the program information. Also, the user can refer to a URL, map information, or the like. Alternatively, the electronic storage unit 216 may be provided separately, for example, via the Internet.

The data transmitter 218 transmits data stored in the electronic storage unit 216 to the remote controller 110 via the electronic communication unit 214 when the remote controller 110 exists within a communication range, for example, when the distance between the electronic device 100 and the remote controller 110 is within about 10 cm if the wireless communications protocol used is NFC. Alternatively, the communications between the electronic device 100 and the remote controller 110 may be started automatically upon detection of the presence of the remote controller 110 within the communication range and authentication of the electronic device 100 and the remote controller 110.

The electronic device 100 may be a contactless IC tag or IC card provided in a poster or the like. In this case, it is possible to avoid giving the impression that an electric part is provided explicitly, so that the beauty of the appearance of the poster can be maintained. Furthermore, since the electronic device 100 according to this embodiment can operate without a power source, it is possible to reduce maintenance cost. Furthermore, the electronic device 100 may be configured to be capable of actively carrying out communications with other electronic devices, so that, for example, it is possible to provide information using an IC card provided in the remote controller 110.

Furthermore, a program for causing a computer to function as the electronic device 100, or a storage medium storing the program, is provided.

### (Embodiment of Specific Circuit)

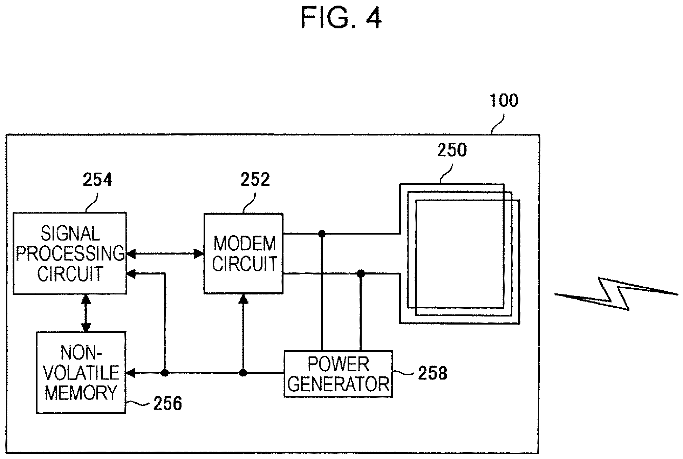

Fig. 4 is a circuit block diagram schematically showing the configuration of the electronic device 100 according to the second embodiment, in which a specific circuit of the electronic device 100 described above is shown.

The electronic device 100 includes a loop antenna 250, a modem circuit 252, a signal processing circuit 254, a non-volatile memory 256, and a power generator 258.

The loop antenna 250 has a plurality of loops so that reception sensitivity will be increased even in a small space. Thus, communications in the NFC communication band are allowed. Depending on the communication protocol used or the frequency of a carrier wave, it is possible to use an antenna included in an IC chip instead of using the loop antenna 250.

The modem circuit 252 modulates data that is to be transmitted to the remote controller 110 and demodulates modulated waves transmitted from the remote controller 110 into data, according to NFC.

The signal processing circuit 254 is a semiconductor integrated circuit that executes signal processing. The signal processing circuit 254 manages and controls the entire electronic device 100. The non-volatile memory 256 has functions of both ROM and RAM, so that information that has been stored is maintained even when power is turned off. Thus, even when a person in charge of the electronic device 100 rewrites data and then supply of power is stopped, the data is maintained.

The power generator 258 converts radio waves transmitted from the remote controller 110 into electric power while communications with the remote controller 110 are in connection, and supplies the electric power to the modem circuit 252, the signal processing circuit 254, and the non-volatile memory 256. Since the electric power obtained from radio waves as described above is usually small, the circuits described above are often formed by elements with minimum power consumption possible.

### (Third Embodiment: Remote Controller 110)

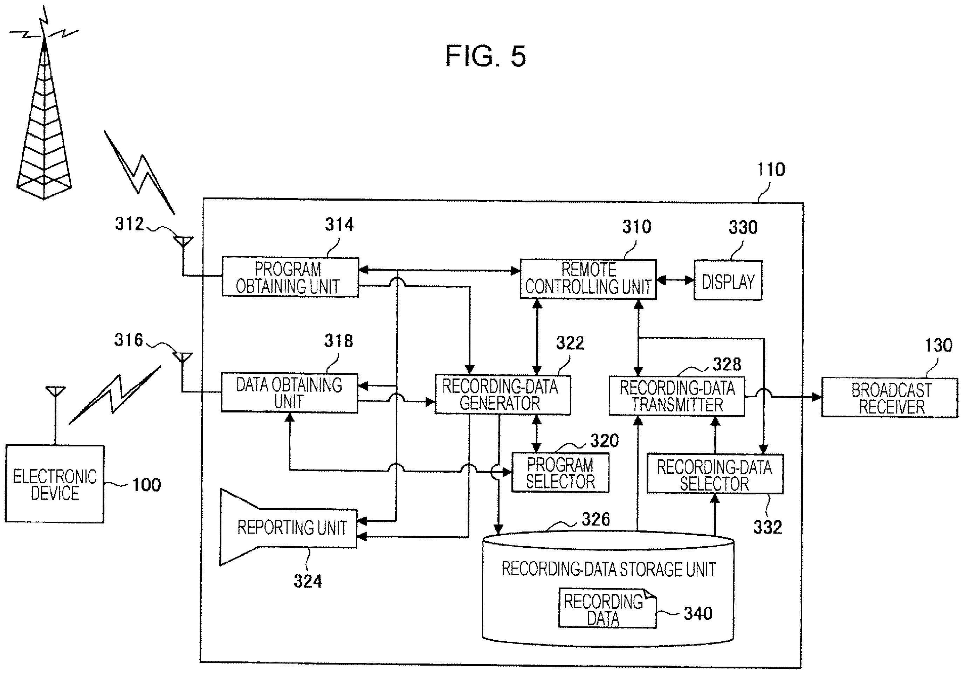

Fig. 5 is a block diagram schematically showing the configuration of the remote controller 110 according to a third embodiment. The remote controller 110 includes a remote controlling unit 310, an EPG antenna 312, a program obtaining unit 314, a data antenna 316, a data obtaining unit 318, a program selector 320, a recording-data generator 322, a reporting unit 324, a recording-data storage unit 326, a recording-data transmitter 328, a display 330, and a recording-data selector 332.

The remote controlling unit 310 manages and controls the entire remote controller 110 by a semiconductor integrated circuit including a central processing unit (CPU).

The EPG antenna 312 is an antenna for receiving an electronic program guide (EPG) including one or two or more pieces of data regarding programs, for example, programs scheduled during a one-week period from a current time, the pieces of data being selected from program name, broadcasting channel, time of start of broadcasting, length of broadcasting period, time of end of broadcasting, and so forth. The electronic program guide is transmitted as superposed on ordinary broadcast signals. Thus, it is possible to use an antenna for receiving ordinary broadcast signals instead of the EPG antenna 312.

The electronic program guide may be obtained in various ways without limitation to obtaining it via the EPG antenna 312. For example, the electronic program guide may be obtained by downloading it from a communication network, such as the Internet.

The program obtaining unit 314 carries out wireless data communications with the electronic device 100 to obtain an electronic program guide including information regarding programs (e.g., program name, broadcasting channel, time of start of broadcasting, length of broadcasting period, time of end of broadcasting, etc.). The program obtaining unit 314 includes, for example, an RF circuit, a modem circuit, an encoder, a decoder, etc.

The data antenna 316 at least has a communication band in which wireless communications can be carried out according to NFC described earlier. The data antenna 316 may take the form of a loop antenna. With the data antenna 316 configured as described above, it is possible to refer to data of various electronic devices 100 that employs NFC systems. Thus, the user of the remote controller 110 can freely read data as well as an electronic program guide, and execute further processing, such as grasping the geographical position of a place of interest from a URL included in the data (content) that has been read.

The data obtaining unit 318 obtains data from the electronic device 100 by wireless communications. The data obtaining unit 318 may narrow down a search range from the data obtained so that the program obtaining unit 314 obtains only an electronic program guide in the search range that has been narrowed down. When only instruction information, such as a URL, has been transmitted from the electronic device 100, the data obtaining unit 318 accesses a site represented by the URL to obtain data.

The program selector 320 displays a plurality of program names or a plurality of keywords included in the data obtained by the data obtaining unit 318 on the display 330, which will be described later, thereby prompting the user to select one of the program names or one of the keywords. Thus, the user can select desired information from a plurality of pieces of information associated with the electronic device 100. The user may be allowed to select a plurality of program names or a plurality of keywords. When information for selection is displayed on the display 330, a plurality of programs may be arranged in parallel in the form of text, or arranged in the form of icons.

When a plurality of programs have been extracted by the recording-data generator 322, which will be described later, the user is further prompted to select one of the plurality of programs. Thus, the user can select a program truly desired by the user. The user may be allowed to select a plurality of programs at this time.

The recording-data generator 322 extracts a program matching the program name or keyword included in the data obtained by the data obtaining unit 318 from the electronic program guide obtained by the program obtaining unit 314 to generate recording data 340 needed for reservation of recording by the broadcast receiver 130. When the program selector 320 has prompted the user to select a program, a program matching the selected program name or keyword is extracted to generate recording data 340.

When a plurality of broadcast receivers 130 that are to be remote-controlled exist and formats and other factors relating to recording data 340 differ among the plurality of broadcast receivers 130, the user may be allowed to select a broadcast receiver 130 for which a reservation for recording is to be made. In this case, the recording-data generator 322 generates recording data 340 according to a format supported by the selected broadcast receiver 130. Furthermore, by registering all the expected broadcast receivers 130 in the remote controller 110, the recording-data generator 322 can generate recording data according to a plurality of formats.

With the program obtaining unit 314 and the recording-data generator 322 configured as described above, it is possible to obtain data from the separate electronic device 100, such as an IC tag or IC card of an advertising poster, and to search for a broadcast program relating to the data on the spot. Thus, it is possible to check on the spot whether it is possible to make a reservation for recording a desired broadcast program and to enter a recording reservation quickly, reliably, and efficiently.

When a matching broadcast program has been detected by the recording-data generator 322, the reporting unit 324 reports the presence of a matching broadcast program to the user, for example, by sound, display, or vibration using a speaker, a display, or a vibrator provided in the remote controller 110. Thus, the user can recognize that a desired broadcast program has been extracted on the basis of data transmitted from an electronic device, so that problems caused by not recognizing a failure to obtain information can be prevented. That is, it is possible to check whether a recording reservation can be made at a position where an advertising poster in which an electronic device is embedded is put up, and it is possible to read information again when an error occurs in obtaining information. Thus, a recording reservation can be made reliably.

The recording-data storage unit 326 is a storage medium, such as a hard disk drive or a flash memory. The recording-data storage unit 326 stores the recording data 340 generated by the recording-data generator 322. With the recording-data storage unit 326 configured as described above, it is possible to store pieces of recording data 340 as needed and to transmit the stored pieces of recording data 340 to the broadcast receiver 130 simultaneously at a different timing.

The recording-data transmitter 328 transmits the recording data 340 stored in the recording-data storage unit 326 to the broadcast receiver 130. Furthermore, when recording data has been selected by the recording-data selector 332, which will be described later, the recording-data transmitter 328 transmits the selected recording data 340.

The recording data 340 may be transmitted from the remote controller 110 to the broadcast receiver 130 according to IrDA. IrDA is a standard for carrying out short-range data communications using infrared rays, and it defines specifications such as a communication distance within 1 m and a communication rate up to 115.2 kbps or 4 Mbps, or a communication distance within 0.2 m and up to 115.2 kbps. IrDA is mainly used to connect a portable terminal with a desktop personal computer or a notebook personal computer.

Instead of directly transmitting the recording data 340 to the broadcast receiver 130, the recording-data transmitter 328 may transmit the recording data 340 to the broadcast receiver 130 via another communication terminal, for example, via an ad-hoc network.

Also, the recording data 340 may be transmitted from the remote controller 110 to the broadcast receiver 130 via a communication network, such as a wireless LAN or the Internet. Also, it is possible to attach recording data 340 processed by the remote controller 110 to an electronic mail and to transmit the recording data 340 attached to the electronic mail to the broadcast receiver 130 via a communication network and a mail server (not shown). When the recording data 340 is transferred as attached to the electronic mail, it is possible to enter a recording reservation and to complete the recording reservation at the place where the electronic device 100 is disposed.

The display 330 is formed of a display or the like provided in the remote controller 110 so that information regarding processing executed by the remote controller 110 can be displayed for the user in the form of text or image.

The recording-data selector 332 displays a plurality of pieces of recording data 340 stored in the recording-data storage unit 326 so that the user can select a desired piece of recording data 340. With the recording-data selector 332 configured as described above, it is possible to select a program that the user truly desires to record from the recording data 340 stored, so that unnecessary recording can be avoided.

Furthermore, a program for causing a computer to function as the remote controller 110, or a storage medium storing the program, is provided.

### (Embodiment of Specific Circuit)

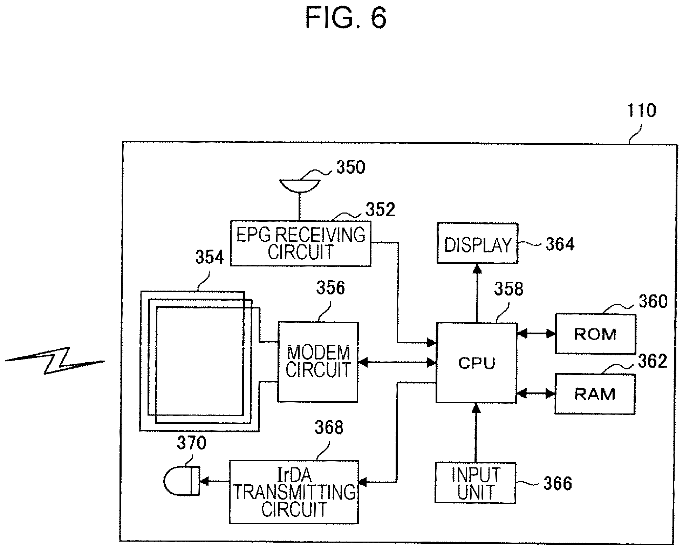

Fig. 6 is a circuit block diagram schematically showing the configuration of the remote controller 110 according to the third embodiment, in which a specific circuit of the remote controller 110 described above is shown.

The remote controller 110 includes a broadcast antenna 350, an EPG receiving circuit 352, a loop antenna 354, a modem circuit 356, a CPU 358, a ROM 360, a RAM 362, a display 364, an input unit 366, an IrDA transmitting circuit 368, and a light emitter 370.

The broadcast antenna 350 is an antenna for receiving broadcast signals, such as television broadcast signals. The broadcast antenna 350 in this embodiment is used particularly for obtaining an electronic program guide.

The EPG receiving circuit 352 receives broadcast signals, such as television broadcast signals, and extracts at least an electronic program guide.

The loop antenna 354 has a plurality of loops so that reception sensitivity will be increased even in a small space. Thus, communications in the NFC communication band are allowed.

The modem circuit 356 modulates data that is to be transmitted to the remote controller 110 and demodulates modulated waves transmitted from the electronic device 100, according to NFC.

The CPU 358 is a semiconductor integrated circuit that executes signal processing, and it manages and controls the entire remote controller 110. The ROM 360 has stored thereon in advance a program that is read by the CPU 358 and used for controlling the remote controller 110. The RAM 362 is used as an area for temporarily storing certain data or parameters used by the CPU 358 to function as the remote controller 110.

The display 364 is a monochrome or color display, and it displays data read from the electronic device 100, such as data of a program. The input unit 366 includes a key input unit (not shown) having a keyboard, numeric keys, or the like. The input unit 366 assists the display function of the display 364, and is used as selecting keys for selecting the program or recording data as described earlier.

The IrDA transmitting circuit 368 transmits recording data 340 stored in the remote controller 110, according to the IrDA standard. The light emitter 370 emits infrared rays to transmit discrete signals at a timing generated by the IrDA transmitting circuit 368.

### (Fourth Embodiment: Broadcast Receiver 130)

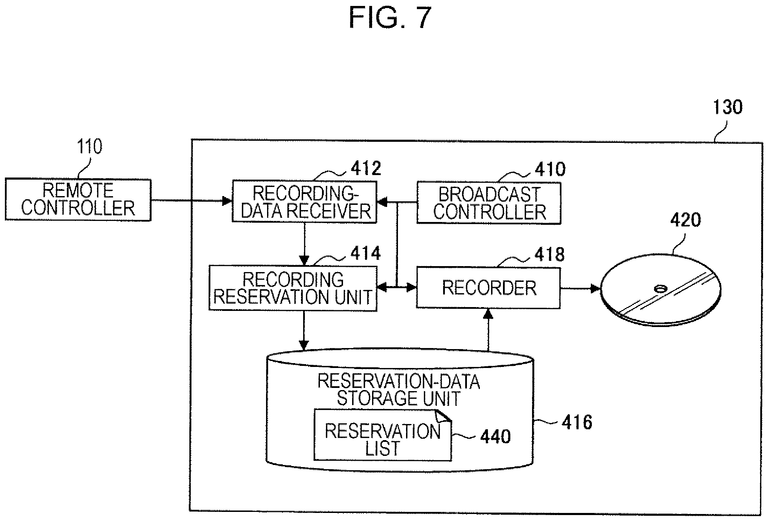

Fig. 7 is a block diagram schematically showing the configuration of the broadcast receiver 130 according to a fourth embodiment. The broadcast receiver 130 includes a broadcast controller 410, a recording-data receiver 412, a recording reservation unit 414, a reservation-data storage unit 416, and a recorder 418.

The broadcast controller 410 manages and controls the entire broadcast receiver 130 by a semiconductor integrated circuit including a central processing unit (CPU).

The recording-data receiver 412 receives the recording data 340 from the remote controller 110.

The recording reservation unit 414 makes a recording reservation according to the recording data 340 received by the recording-data receiver 412. The recording reservation may be made by specifying, for example, a program name, a broadcasting channel, a time of start of broadcasting, a length of broadcasting period, and a time of end of broadcasting for a program scheduled at a future time, including a current time, and adding these pieces of information regarding the recording reservation to a recording-reservation list 440 including information regarding recording reservations that have already been entered.

The reservation-data storage unit 416 is a storage medium, such as a hard disk drive or a flash memory, and it stores the reservation list 440 generated by the recording reservation unit 414.

The recorder 418 receives broadcast signals on the basis of the recording reservations in the reservation list 440 stored in the reservation-data storage unit 416, and records the broadcast signals on its internal hard disk drive or a separate storage medium 420, such as a compact disk (CD) or a digital versatile disk (DVD).

Furthermore, a program for causing a computer to function as the broadcast receiver 130, or a storage medium storing the program, is provided.

### (Embodiment of Specific Circuit)

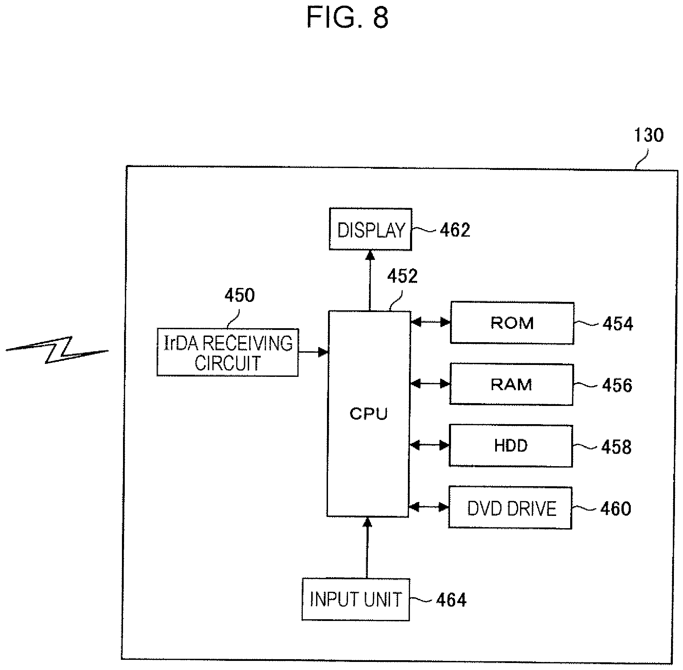

Fig. 8 is a circuit block diagram schematically showing the configuration of the broadcast receiver 130 according to the fourth embodiment, in which a specific circuit of the broadcast receiver 130 described above is shown.

The broadcast receiver 130 includes an IrDA receiving circuit 450, a CPU 452, a ROM 454, a RAM 456, a hard disk drive (HDD) 458, a DVD drive 460, a display 462, and an input unit 464.

The IrDA receiving circuit 450 receives the recording data 340 transmitted from the IrDA transmitting circuit 368 of the remote controller 110 according to the IrDA standard. IrDA uses infrared rays, and representation is basically based on discrete signals.

The CPU 452 is a semiconductor integrated circuit that executes signal processing, and it manages and controls the entire broadcast receiver 130. The ROM 454 has stored thereon in advance a program that is read by the CPU 452 and used for controlling the broadcast receiver 130. The RAM 456 is used as an area for temporarily storing certain data or parameters used by the CPU 452 to achieve the functions of the broadcast receiver 130.

The hard disk drive 458 is a storage medium that is capable of storing a large volume of data, and it allows random access similarly to a DVD or a CD described below. The DVD drive 460 writes data to or reads data from a separate DVD loaded thereon. Other types of storage media may be used, such as CDs, magnetic tapes, MOs, or flash memories.

The display 462 is represented by a monochrome or color display, and it is used for confirmation of a recording reservation, etc. The input unit 464 includes a key input unit (not shown) having a keyboard, numeric keys, or the like, and it assists the display function of the display 462.

The broadcast receiver 130 and the remote controller 110 may be constructed together as a single apparatus.

### (Fifth Embodiment: Remote Control System)

Now, a specific embodiment of a remote control system including the electronic device 100, the remote controller 110, and the broadcast receiver 130 described above will be described.

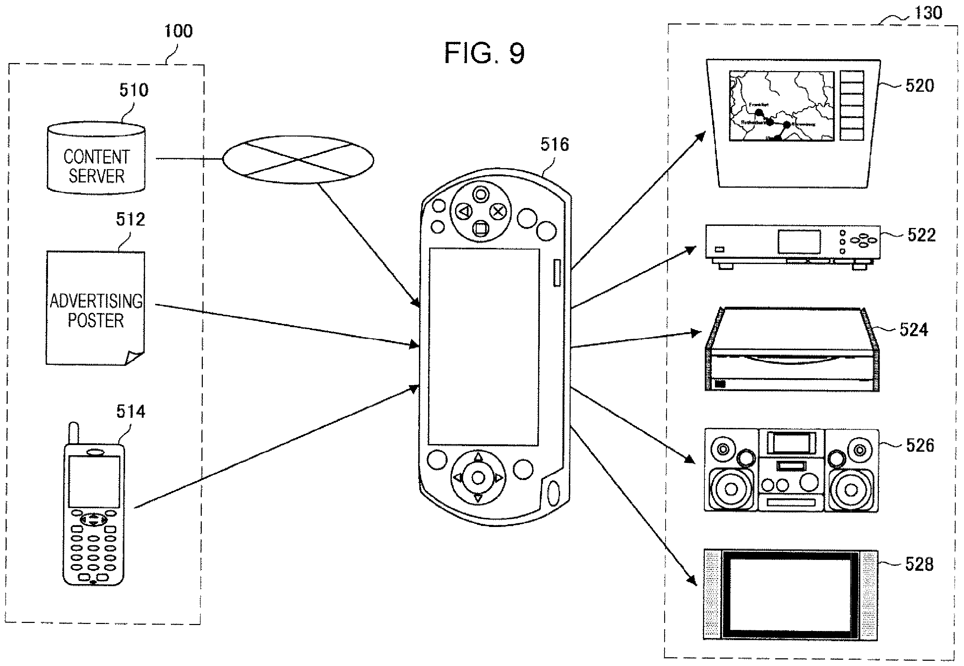

Fig. 9 is a schematic diagram showing a specific example of a remote control system. As electronic device 100, a content server 510, an advertising poster 512, and a portable terminal 514 are shown, and as a remote controller 110, a portable game machine 516 is shown.

For example, the portable game machine 516 is connected to the content server 510 via a communication network, such as the Internet, and content of a broadcast program or the like, possessed by the content server 510, is downloaded and associated with an electronic program guide. Furthermore, NFC chips compliant with the NFC standard described earlier are provided in the advertising poster 512 and the portable terminal 514 so that the advertising poster 512 and the portable terminal 514 can carry out data communications with the portable game machine 516 also having an NFC chip.

Upon obtaining data regarding information desired by the user from various apparatuses (electronic devices 100), in the portable game machine 516, the data is associated with an electronic program guide to generate and store recording data. The recording data may be maintained in the portable game machine 516 at least until a reservation for recording by the broadcast receiver 130 is completed.

At a timing and place that are different from the timing and place of obtainment of the data from the electronic devices 100, the portable game machine 516 transmits the recording data to the broadcast receiver 130. The broadcast receiver 130 is, for example, a car navigation system 520, an integrated receiver and decoder (IRD) 522, a hard disk drive (HDD) recorder 524, an audio player 526, or a television set 528. The broadcast receiver 130 makes a recording reservation according to the received recording data, and starts recording at the time of start of broadcasting included in the recording data.

If the broadcast receiver 130 also has an NFC chip mounted thereon, recording data may be transmitted automatically simply by placing the remote controller 110 within a certain range of the broadcast receiver 130 or in contact with the broadcast receiver 130.

Although various devices have been described as the electronic device 100, the remote controller 110, and the broadcast receiver 130, without limitation to the devices, any apparatus including the components of the electronic device 100, the remote controller 110, or the broadcast receiver 130 may be used. Also, it is possible to use any of the devices shown as the electronic devices 100 and broadcast receivers 130 in Fig. 9 as a remote controller 110.

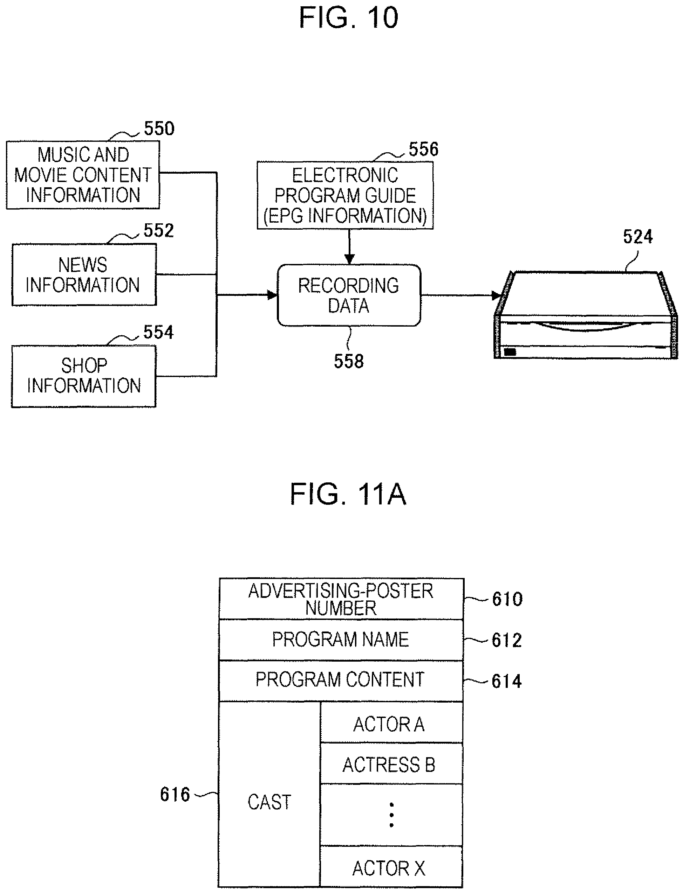

Fig. 10 is a diagram for explaining association with an electronic program guide in the remote control system described above. In this case, music and movie content information 550 at the content server 510 as an electronic device 100, or news information 552 or shop information 554 at the advertising poster 512 or the portable terminal 514 is downloaded to the remote controller 110, and a program relating to a program name or keyword included in the downloaded data is extracted from an electronic program guide 556, thereby generating recording data 558 as program reservation information. Then, the recording data 558 is transmitted to the HDD recorder 524 as a broadcast receiver 130.

For example, a music hit chart is read from the music and movie content information 550 at the content server 510 and a desired piece of music is selected from the hit chart and recorded, or a related program is recorded on the basis of latest movie information.

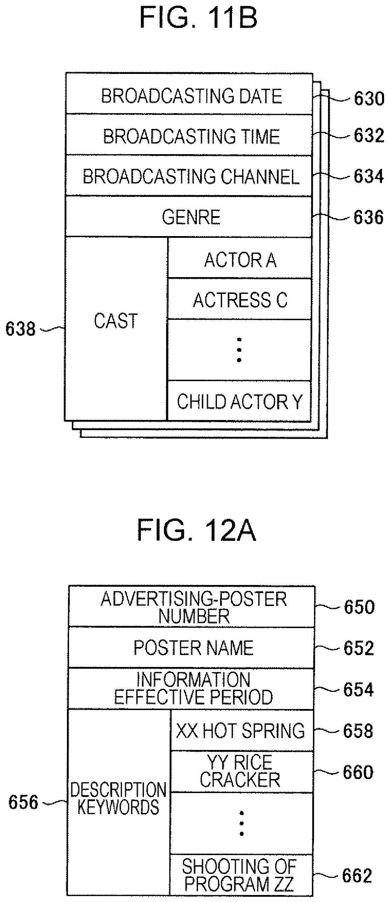

Fig. 11A is a diagram showing an example of advertising-poster data owned by the electronic device 100, and Fig. 11B is a diagram showing an example of recording data generated by the remote controller 110.

The advertising-poster data shown in Fig. 11A is data relating to a broadcast program itself. The advertising-poster shows an advertising-poster number representing an identification number of the poster, a program name 612 representing an individual name (title) of the broadcast program, program content 614 describing the content of the program or keywords for identifying the program, and cast 616 of the program, such as actor A, actress B, ..., actor X.

The recording data shown in Fig. 11B is data detected from an electronic program guide on the basis of the information of the advertising poster shown in Fig. 11A. The recording data includes a broadcast date 630 and a broadcasting time 632 as a time of start of broadcasting and a broadcasting period of the program that is to be recorded, a broadcasting channel 634, a program genre 636, and cast 638, such as actor A, actress C, ... child actor Y similarly to the advertising poster. Since the recording data is new data that is retrieved on the basis of the advertising-poster data, such as a program name or keywords, the attached information, such as the cast 638, differs from the data in the original advertising poster.

The broadcast receiver 130 can make a reservation for recording when the recording data at least includes information of a time of start of broadcasting and a broadcasting channel.

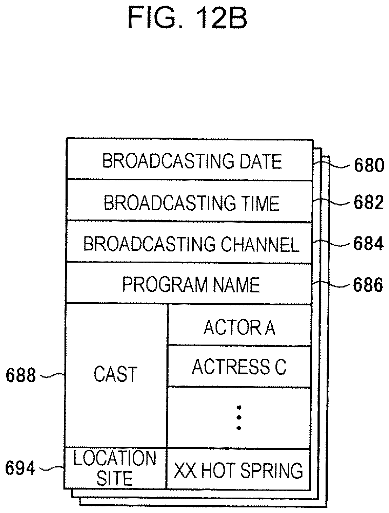

Fig. 12A is a diagram showing another embodiment of advertising-poster data owned by the electronic device 100, and Fig. 12B is a diagram showing another embodiment of recording data generated by the remote controller 110.

As opposed to the advertising-poster data shown in Fig. 11A, the advertising-poster data shown in Fig. 12A represents general information not limited to information of a broadcast program. The advertising poster shows an advertising-poster number 650 representing an identification number of the poster, a poster name 652 representing an individual name (title) of the poster, an information effective period 654 representing an effective period of the content of the poster, and description keywords 656 regarding the content of the poster, such as "XX hot spring" 658, "YY rice cracker" 660, and "shooting of program ZZ" 662.

The advertising poster shown in Fig. 12A is not originally created for the purpose of recording of a broadcast program. Thus, the remote controller 110 has to extract keywords from the data and search for a broadcast program matching information of the data. For this purpose, the remote controller 110 includes the program selector 320. The program selector 320 displays on the display 330 a plurality of keywords included in the obtained data so that the user can select a program name or keyword. Furthermore, when a plurality of programs have been extracted as a result of searching an electronic program guide on the basis of the selected program name or keyword, the user is prompted to select one of the programs.

In this example, a broadcast program taken at XX hot spring as a location site is detected on the basis of the poster name 652 and "XX hot spring" 658 and "shooting of program ZZ" 662 in the description keywords 656.

The recording data shown in Fig. 12B is a result of searching for a program on the basis of the information of the advertising poster shown in Fig. 12A. The recording data includes a broadcast date 680 and a broadcast time 682 as a time of start of broadcasting and a broadcasting period of the program that is to be recorded, a broadcasting channel 684, a program name 686, actor A and actress C as cast 688 of the program, and XX hot spring 696 as a location site 694 of the program.

### (Sixth Embodiment: Remote Control System)

Now, a remote control system according to another embodiment, including the electronic device 100, the remote controller 110, and the broadcast receiver 130 described above, will be described. In this embodiment, the remote controller 110 obtains data from the electronic device 100, and in the remote controller 110, the data is associated with music information referred to by music or movie content corresponding to an electronic program guide, for example, information that allows unique identification of a piece of music, thereby generating music data corresponding to recording data. The broadcast receiver 130 downloads or records the piece of music on the basis of the music data.

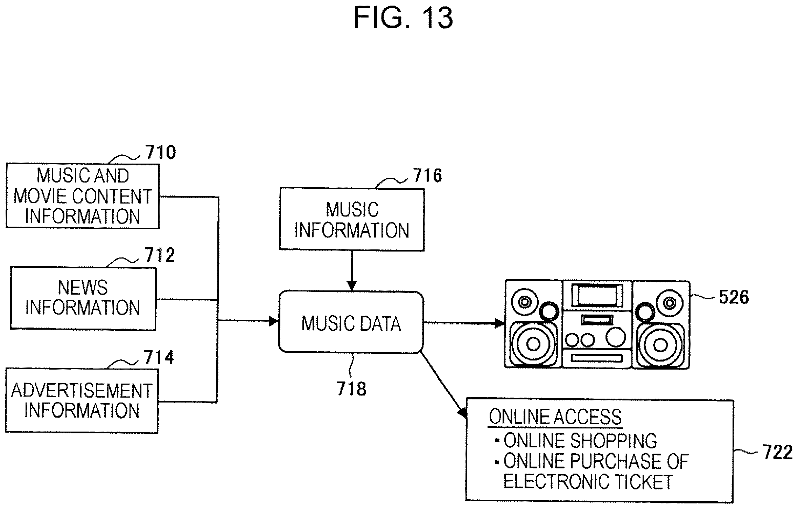

Fig. 13 is a diagram for explaining association with music information in the remote control system. In this embodiment, music and movie content information 710 at the content server 510 as an electronic device 100 or news information 712 or advertisement information 714 at the advertising poster 512 or the portable terminal 514 is downloaded to the remote controller 110, and a piece of music matching a program name or keyword in the downloaded data is extracted from music information 716 identifying a piece of music referred to by music or movie content, thereby generating music data 718 as music reservation information.

In this example, a music hit chart is read from the music and movie content information 710 at the content server 510, and a piece of content for controlling playback of a desired piece of music is purchased on the basis of the music hit chart, or a piece of content for controlling viewing of a related program is purchased on the basis of latest movie information.

Then, the music data 718 is transmitted to the audio player 526 as a broadcast receiver 130. The broadcast receiver 130 may automatically download or record a desired piece of music at a certain timing after receiving the music data 718. Also, it is possible to make an online access 722 by other means of communications and to automatically perform online shopping or online purchase of an electronic ticket.

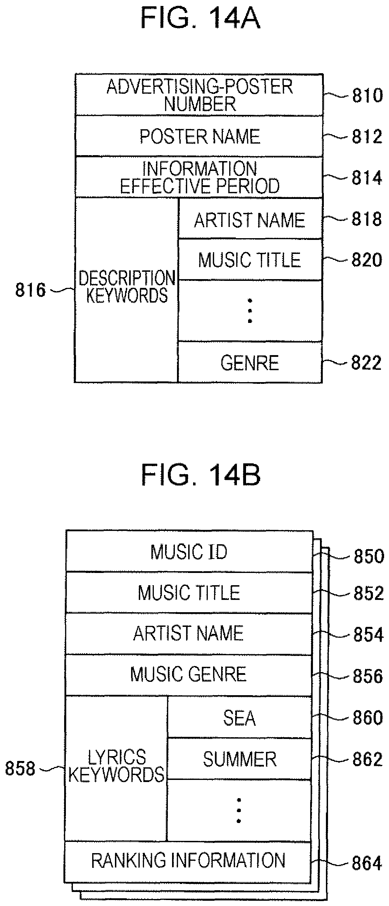

Fig. 14A shows another embodiment of adverting-poster data owned by the electronic device 100, and Fig. 14B shows another embodiment of music data generated by the remote controller 110.

Similarly to the advertising-poster data shown in Fig. 12A, the advertising-poster data shown in Fig. 14A represents general information not limited to music information. The advertising-poster data includes an advertising-poster number 810 representing an identification number of the poster, a poster name 812 representing an individual name (title) of the poster, an information effective period 814 representing an effective period of the content of the poster, and description keywords 816 relating to the content of the poster, such as an "artist name" 818, a "music title" 820, ..., and a "genre" 822.

The advertising-poster data shown in Fig. 14A is not originally created for the purpose of identification of a piece of music. Thus, the remote controller 110 has to extract keywords from the data and search for a piece of music matching information of the data. For this purpose, the remote controller 110 displays on the display 330 a plurality of keywords included in the obtained data so that the user can select a music title or keyword. Furthermore, when a plurality of pieces of music has been extracted as a result of searching on the basis of the selected music title or keyword, the user is allowed to select one of the pieces of music.

In this example, a piece of music is detected on the basis of the "artist name" 818, the "music title" 820, and the "genre" 822 in the description keywords 816.

The recording data shown in Fig. 14B is a result of searching for a piece of music on the basis of the information of the advertising poster shown in Fig. 14A as described above. The piece of music data includes a music ID 850 representing an identification number of the piece of music, a music title 852, an artist name 854, a music genre 856, and "sea" 860 and "summer" 862 as lyrics keywords 858, and ranking information 864.

### (Seventh Embodiment: Remote Control Method)

Now, a remote control method for remote-controlling the broadcast receiver 130 by the remote controller 110 using data obtained from the electronic device 100 will be described.

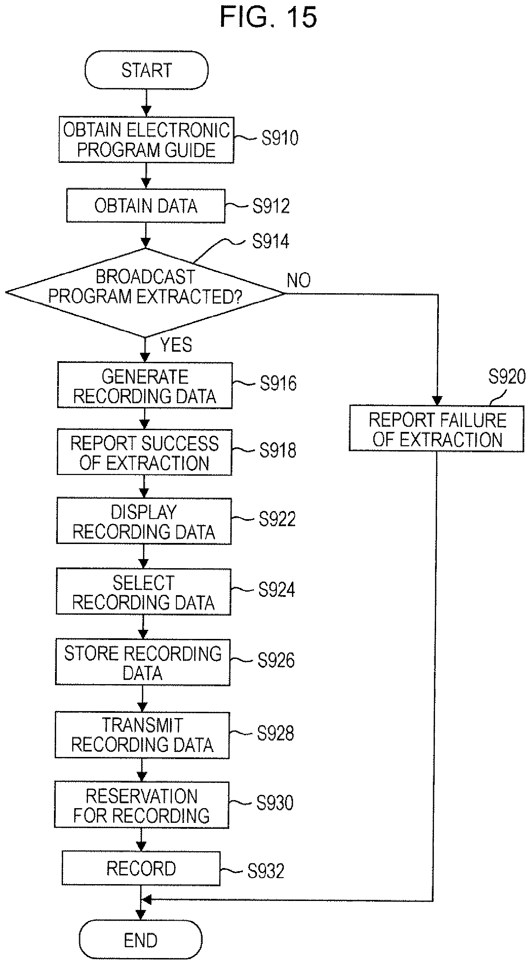

Fig. 15 is a flowchart showing the flow of the remote control method.

First, the remote controller 110 obtains electronic program guides including information regarding programs (e.g., program name, broadcasting channel, time of start of broadcasting, broadcasting period, time of end of broadcasting, etc.) at predetermined intervals (S910). By periodically obtaining electronic program guides, it is possible to reduce processing time when obtaining data as described later, so that a reservation for recording can be entered efficiently.

For example, when the user finds an advertising poster of interest at a concourse of a station or the like, the user checks whether a broadcast program relating to the poster exists. The user places the remote controller 110, such as a cellular phone of the user, in proximity to the advertising poster. Then, data communications with the electronic device 100 of the advertising poster are started automatically. Then, the user operates a button of the input unit of the remote controller 110 to obtain data (S912).

From an electronic program guide that has already been obtained, the remote controller 110 tries to extract a program matching a program name or keyword in the data obtained in the data obtaining step (S912) (S914). When the extraction succeeds, the remote controller 110 generates recording data needed for reservation of recording by the broadcast receiver 130 (S916), and reports the success of extraction to the user via the reporting unit (S918). When the extraction of a program fails, the remote controller 110 reports the failure of extraction to the user via the display (S920). The process is then exited.

When a plurality of pieces of recording data generated in this manner exists, the remote controller 110 displays all the plurality of pieces of recording data on the display (S922), and prompts the user to select a piece of recording data truly needed (S924). When selection of recording data is completed, the remote controller 110 stores the selected recording data (S926).

For example, the user brings home the remote controller 110 having stored the recording data as described above, and uses the remote controller 110 for reservation of recording by the broadcast receiver 130 installed at home. The recording data is transmitted by infrared rays when the remote controller 110 and the broadcast receiver 130 support IrDA communications, and the recording data is transmitted by NFC electromagnetic-wave communications when the broadcast receiver 130 supports NFC communications (S928). When the recording reservation has been completed as described above (S930), a recording list including a list of recording reservations is generated in the broadcast receiver 130, and recording is executed on the basis of the recording list (S932).

According to the remote control method, it is possible to obtain information of a desired program at an arbitrary place, check on the spot whether a reservation for recording of the program can be made, store the information, and execute a reservation for recording by a broadcast receiver by a simple operation.

Although preferred embodiments of the present invention have been described above with reference to the accompanying drawings, it is to be understood that the present invention is not limited to the embodiments. Obviously, it is possible for those skilled in the art to conceive various alternatives or modifications within the scope of the claims, and it is to be understood that the alternatives and modifications fall within the technical scope of the present invention.

For example, although a broadcast antenna and an EPG receiving circuit for receiving an electronic program guide are provided in a remote controller in the embodiments described above, without limitation to the embodiments, such an arrangement for obtaining an electronic program guide may be provided in a broadcast receiver. In this case, an electronic program guide is transmitted from the broadcast receiver to a remote controller when recording data is transmitted from the remote controller, and the remote controller stores the electronic program guide and uses the electronic program guide for searching of data from an electronic device. According to another example, an electronic device may be provided as a part of a television set. When an electronic device is provided as a part of a television set as described above, during broadcasting of a television program, program information is distributed as accompanying information of the program, so that the program information can be captured by placing a remote controller in proximity to the television set.

Furthermore, according to another example, although communications between an electronic device and a remote controller and communications between a remote controller and a broadcast receiver are carried out by contactless wireless communications in the embodiments described above, without limitation to the embodiments, communications may be carried out by wire or by wireless and in a contacting manner or in a contactless manner.

The steps in the remote control method in this specification need not necessarily be executed sequentially in the order shown in the flowchart, and the steps may include steps that are executed in parallel or individually (e.g., parallel processing or object-based processing).

## Claims

1. A remote control system comprising a broadcast receiver (130) and a remote controller (110) for remote-controlling the broadcast receiver (130),
wherein the remote controller (110) includes:
registering means in which at least one broadcast receiver is registered;
a data obtaining unit (318) that obtains data, by wireless communications, from an IC card or IC tag (100) provided on an object in a public space;
a recording-reservation-data storage unit (326) that stores recording reservation data (340) in a format supported by a broadcast receiver (130) selected from said at least one broadcast receiver registered in the registering means of the remote controller (110); and
a recording-data transmitter (328) that transmits the stored recording reservation data to the selected broadcast receiver (130), and
wherein the broadcast receiver (130) includes:
a recording-reservation-data receiver (412) that receives the recording reservation data transmitted from the remote controller (110);
a recording reservation unit (414) that makes a reservation for recording according to the recording reservation data; and
a recorder (418) that receives and records broadcast signals according to the reservation for recording,
wherein the remote controller (110) includes:
a program obtaining unit (314) that obtains an electronic program guide;
a recording-reservation data generator (322) that extracts, from the electronic program guide, a program matching a program name or keyword included in the obtained data and that generates recording reservation data needed for reservation of recording of the matching program by said selected broadcast receiver (130) according to a format supported by said broadcast receiver (130); and
a reporting unit (324) configured to report to a user of the remote controller that the recording-reservation-data generator (322) has successfully extracted from the electronic program guide obtained by the program-obtaining unit (314) a broadcast program that matches said program name or keyword included in the data obtained from the separate electronic device (100) by the data-obtaining unit (318) by wireless communication.

2. A remote controller (110) for remote-controlling a broadcast receiver (130) that receives and records broadcast signals, the remote controller (110) comprising:
a registering means in which at least one broadcast receiver is registered;
a data obtaining unit (318) that obtains data, by wireless communications, from an IC tag or IC tag (100) provided on an object in a public space;
a recording-reservation-data storage unit (326) that stores recording reservation data (340) in a format supproted by a broadcast receiver (130) selected from said at least one broadcast receiver registered in the registering means of the remote controller;
a recording-reservation-data transmitter (328) that transmits the stored recording reservation data to the broadcast receiver (130),
a program obtaining unit (314) that obtains an electronic program guide;
a recording-reservation data generator (322) that extracts, from the electronic program guide, a program matching a program name or keyword included in the obtained data and that generates recording reservation data needed for reservation of recording of the matching program by the broadcast receiver (130) according to a format supported by said broadcast receiver (130); and
a reporting unit (324) configured to report to a user of the remote controller that the recording-reservation data generator (322) has successfully extracted from the electronic program guide obtained by the program-obtaining unit (314) a broadcast program that matches said program name or keyword included in the data obtained from the separate electronic device (100) by the data-obtaining unit (318) by wireless communication.

3. The remote controller according to Claim 2, further comprising:
a display (330); and
a program selector (320) that displays on the display a plurality of program names or a plurality of keywords included in the obtained data so that a user is allowed to select one of the program names or one of the keywords,
wherein the recording-reservation data generator generates the recording reservation data by extracting a program matching the selected program name or keyword.

4. The remote controller according to Claim 3, wherein the program selector further allows the user to select a program when a plurality of programs have been extracted by the recording-data generator.

5. The remote controller according to Claim 2, further comprising:
a display (330); and
a recording-reservation-data selector (332) that displays on the display the recording reservation data stored in the recording-data storage unit so that a user is allowed to select recording reservation data,
wherein the recording-reservation-data transmitter transmits the selected recording reservation data.

6. The remote controller according to Claim 2, wherein the wireless communications are carried out according to the Near Field Communication standard.

7. The remote controller according to Claim 2, wherein the recording reservation data is transmitted from the remote controller (110) to the broadcast receiver (130) according to IrDA.

8. A program for remote-controlling a broadcast receiver (130) that receives and records broadcast signals,
the program causing a computer to function as:
a registering means in which at least one broadcast receiver is registered;
a data obtaining unit (318) that obtains data, by wireless communications, from an IC tag or IC tag (100) provided on an object in a public space;
a recording-reservation-data storage unit (326) that stores recording reservation data (340) in a format supproted by a broadcast receiver (130) selected from said at least one broadcast receiver registered in the registering means of the remote controller;
a recording-reservation-data transmitter (328) that transmits the stored recording reservation data to the broadcast receiver (130),
a program obtaining unit (314) that obtains an electronic program guide;
a recording-reservation data generator (322) that extracts, from the electronic program guide, a program matching a program name or keyword included in the obtained data and that generates recording reservation data needed for reservation of recording of the matching program by the broadcast receiver (130) according to a format supported by said broadcast receiver (130); and
a reporting unit (324) configured to report to a user of the remote controller that the recording-reservation data generator (322) has successfully extracted from the electronic program guide obtained by the program-obtaining unit (314) a broadcast program that matches said program name or keyword included in the data obtained from the separate electronic device (100) by the data-obtaining unit (318) by wireless communication.

9. A remote control method for remote-controlling a broadcast receiver (130) that receives and records broadcast signals, the remote control method comprising:
a data obtaining step (S912) of obtaining data, by wireless communications, from an IC card or IC tag (100) provided on an object in a public space;
a registering step of registering at least one broadcast receiver, a recording-reservation-data storing step (S926) of storing recording reservation data in a format supported by a broadcast receiver (130) selected from said at least one broadcast receiver registered in the registering step;
a recording-reservation-data transmitting step (S928) of transmitting the stored recording reservation data to the selected broadcast receiver (130),
a program obtaining step (S910) of obtaining an electronic program guide;
a recording-reservation-data generating step (S916) of extracting, from the electronic program guide, a program matching a program name or keyword included in the obtained data and generating recording reservation data needed for reservation of recording of the matching program by the broadcast receiver (130) according to a format supported by said selected broadcast receiver (130); and
a reporting step (S918) of reporting to a user of the remote controller that the recording-reservation-data generating step (S916) has successfully extracted from the electronic program guide obtained in the program-obtaining step (S910) a broadcast program that matches said program name or keyword included in the data obtained from the separate electronic device (100) in the data-obtaining step (S912).

10. The remote controller according to claim 2, implemented as a cellular phone, a portable game machine, a personal digital assistant, a mobile personal computer, a watch, a calculator or a mouse.

## Patentansprüche

1. Fernsteuersystem, das einen Rundfunkempfänger (130) und eine Fernsteuerung (110) zum Fernsteuern des Rundfunkempfängers (130) umfasst,
wobei die Fernsteuerung (110) Folgendes beinhaltet:
ein Registrierungsmittel, in dem mindestens ein Rundfunkempfänger registriert ist;
eine Datenerhalteeinheit (318), die Daten von einer IC-Karte oder einem IC-Tag (100), die bzw. der an einem Objekt in einem öffentlichen Raum vorgesehen ist, über drahtlose Kommunikation erhält;
eine Aufnahmereservationsdaten-Speichereinheit (326), die Aufnahmereservationsdaten (340) in einem von dem Rundfunkempfänger (130), der aus dem mindestens einen in dem Registrierungsmittel der Fernsteuerung (110) registrierten Rundfunkempfänger ausgewählt ist, unterstützen Format speichert; und
einen Aufnahmedatensender (328), der die gespeicherten Aufnahmereservationsdaten an den ausgewählten Rundfunkempfänger (130) sendet, und
wobei der Rundfunkempfänger (130) Folgendes beinhaltet:
einen Aufnahmereservationsdatenempfänger (412), der die von der Fernsteuerung (110) gesendeten Aufnahmereservationsdaten empfängt;
eine Aufnahmereservationseinheit (414), die eine Reservation zum Aufnehmen gemäß den Aufnahmereservationsdaten vornimmt; und
eine Aufnahmevorrichtung (418), die Rundfunksignale gemäß der Reservation zum Aufnehmen empfängt und aufnimmt,
wobei die Fernsteuerung (110) Folgendes beinhaltet:
eine Programmerhalteeinheit (314), die einen elektronischen Programmführer erhält;
einen Aufnahmereservationsdatengenerator (322), der aus dem elektronischen Programmführer ein Programm extrahiert, das mit einem Programmnamen oder einem Schlüsselwort, die in erhaltenen Daten enthalten sind, übereinstimmt, und der Aufnahmereservationsdaten erzeugt, die zur Reservation des Aufnehmens des übereinstimmenden Programms durch den ausgewählten Rundfunkempfänger (130) gemäß einem von dem Rundfunkempfänger (130) unterstützten Format benötigt werden; und
eine Meldeeinheit (324), die ausgelegt ist zum Melden an einen Benutzer der Fernsteuerung, dass der Aufnahmereservationsdatengenerator (322) erfolgreich aus dem elektronischen Programmführer, der durch die Programmerhalteeinheit (314) erhalten wurde, ein Rundfunkprogramm extrahiert hat, das mit dem Programmnamen oder dem Schlüsselwort, die in den von der separaten elektronischen Vorrichtung (100) durch die Datenerhalteeinheit (318) durch drahtlose Kommunikation erhalten wurden, übereinstimmt.

2. Fernsteuerung (110) zum Fernsteuern eines Rundfunkempfängers (130), der Rundfunksignale empfängt und aufzeichnet, wobei die Fernsteuerung (110) Folgendes umfasst:
ein Registrierungsmittel, in dem mindestens ein Rundfunkempfänger registriert ist;
eine Datenerhalteeinheit (318), die Daten von einem IC-Tag oder einem IC-Tag (100), der an einem Objekt in einem öffentlichen Raum vorgesehen ist, über drahtlose Kommunikation erhält;
eine Aufnahmereservationsdaten-Speichereinheit (326), die Aufnahmereservationsdaten (340) in einem von einem Rundfunkempfänger (130), der aus dem mindestens einen in dem Registrierungsmittel der Fernsteuerung registrierten Rundfunkempfänger ausgewählt ist, unterstützen Format speichert;
einen Aufnahmereservationsdatensender (328), der die gespeicherten Aufnahmereservationsdaten an den Rundfunkempfänger (130) sendet,
eine Programmerhalteeinheit (314), die einen elektronischen Programmführer erhält;
einen Aufnahmereservationsdatengenerator (322), der aus dem elektronischen Programmführer ein Programm extrahiert, das mit einem Programmnamen oder einem Schlüsselwort, die in erhaltenen Daten enthalten sind, übereinstimmt, und der Aufnahmereservationsdaten erzeugt, die zur Reservation des Aufnehmens des übereinstimmenden Programms durch den Rundfunkempfänger (130) gemäß einem von dem Rundfunkempfänger (130) unterstützten Format benötigt werden; und
eine Meldeeinheit (324), die ausgelegt ist zum Melden an einen Benutzer der Fernsteuerung, dass der Aufnahmereservationsdatengenerator (322) erfolgreich aus dem elektronischen Programmführer, der durch die Programmerhalteeinheit (314) erhalten wurde, ein Rundfunkprogramm extrahiert hat, das mit dem Programmnamen oder dem Schlüsselwort, die in den von der separaten elektronischen Vorrichtung (100) durch die Datenerhalteeinheit (318) durch drahtlose Kommunikation erhalten wurden, übereinstimmt.

3. Fernsteuerung nach Anspruch 2, die ferner Folgendes umfasst:
eine Anzeige (330); und
einen Programmwähler (320), der auf der Anzeige eine Vielzahl von Programmnamen oder eine Vielzahl von Schlüsselwörtern anzeigt, die in den erhaltenen Daten enthalten sind, so dass einem Benutzer erlaubt ist, einen der Programmnamen oder eines der Schlüsselwörter auszuwählen,
wobei der Aufnahmereservationsdatengenerator die Aufnahmereservationsdaten durch Extrahieren eines Programms, das mit dem ausgewählten Programmnamen oder dem ausgewählten Schlüsselwort übereinstimmt, erzeugt.

4. Fernsteuerung nach Anspruch 3, wobei der Programmwähler dem Benutzer ferner erlaubt, ein Programm auszuwählen, wenn eine Vielzahl von Programmen durch den Aufnahmedatengenerator extrahiert wurde.

5. Fernsteuerung nach Anspruch 2, die ferner Folgendes umfasst:
eine Anzeige (330); und
einen Aufnahmereservationsdatenwähler (332), der auf der Anzeige die in der Aufnahmedatenspeichereinheit gespeicherten Aufnahmereservationsdaten anzeigt, so dass einem Benutzer erlaubt ist, Aufnahmereservationsdaten auszuwählen,
wobei der Aufnahmereservationsdatensender die ausgewählten Aufnahmereservationsdaten sendet.

6. Fernsteuerung nach Anspruch 2, wobei die drahtlosen Kommunikationen gemäß dem Nahfeldkommunikationsstandard ausgeführt werden.

7. Fernsteuerung nach Anspruch 2, wobei die Aufnahmereservationsdaten von der Fernsteuerung (110) gemäß IrDA an den Rundfunkempfänger (130) gesendet werden.

8. Programm zur Fernsteuerung eines Rundfunkempfängers (130), der Rundfunksignale empfängt und aufzeichnet,
wobei das Programm einen Computer veranlasst, als Folgendes zu fungieren:
ein Registrierungsmittel, in dem mindestens ein Rundfunkempfänger registriert ist;
eine Datenerhalteeinheit (318), die Daten von einem IC-Tag oder einem IC-Tag (100), der an einem Objekt in einem öffentlichen Raum vorgesehen ist, über drahtlose Kommunikation erhält;
eine Aufnahmereservationsdaten-Speichereinheit (326), die Aufnahmereservationsdaten (340) in einem von einem Rundfunkempfänger (130), der aus dem mindestens einen in dem Registrierungsmittel der Fernsteuerung registrierten Rundfunkempfänger ausgewählt ist, unterstützen Format speichert;
ein Aufnahmereservationsdatensender (328), der die gespeicherten Aufnahmereservationsdaten an den Rundfunkempfänger (130) sendet,
eine Programmerhalteeinheit (314), die einen elektronischen Programmführer erhält;
ein Aufnahmereservationsdatengenerator (322), der aus dem elektronischen Programmführer ein Programm extrahiert, das mit einem Programmnamen oder einem Schlüsselwort, die in erhaltenen Daten enthalten sind, übereinstimmt, und der Aufnahmereservationsdaten erzeugt, die zur Reservation des Aufnehmens des übereinstimmenden Programms durch den Rundfunkempfänger (130) gemäß einem von dem Rundfunkempfänger (130) unterstützten Format benötigt werden; und
eine Meldeeinheit (324), die ausgelegt ist zum Melden an einen Benutzer der Fernsteuerung, dass der Aufnahmereservationsdatengenerator (322) erfolgreich aus dem elektronischen Programmführer, der durch die Programmerhalteeinheit (314) erhalten wurde, ein Rundfunkprogramm extrahiert hat, das mit dem Programmnamen oder dem Schlüsselwort, die in den von der separaten elektronischen Vorrichtung (100) durch die Datenerhalteeinheit (318) durch drahtlose Kommunikation erhalten wurden, übereinstimmt.

9. Fernsteuerungsverfahren zum Fernsteuern eines Rundfunkempfängers (130), der Rundfunksignale empfängt und aufzeichnet, wobei das Fernsteuerungsverfahren die folgenden Schritte umfasst:
einen Datenerhalteschritt (S912) zum Erhalten von Daten von einer IC-Karte oder einem IC-Tag (100), die bzw. der an einem Objekt in einem öffentlichen Raum vorgesehen ist, über drahtlose Kommunikation;
einen Registrierungsschritt des Registrierens mindestens eines Rundfunkempfängers,
einen Aufnahmereservationsdaten-Speicherschritt (S926) des Speicherns von Aufnahmereservationsdaten in einem von einem Rundfunkempfänger (130), der aus dem mindestens einen in dem Registrierungsschritt registrierten Rundfunkempfänger ausgewählt ist, unterstützten Format;
einen Aufnahmereservationsdaten-Sendeschritt (S928) des Sendens der gespeicherten Aufnahmereservationsdaten an den ausgewählten Rundfunkempfänger (130),
einen Programmerhalteschritt (S910) des Erhaltens eines elektronischen Programmführers;
einen Aufnahmereservationsdaten-Erzeugungsschritt (S916) des Extrahierens aus dem elektronischen Programmführer eines Programms, das mit einem Programmnamen oder einem Schlüsselwort, die in den erhaltenen Daten enthalten sind, übereinstimmt, und des Erzeugens von Aufnahmereservationsdaten, die zur Reservation des Aufnehmens des übereinstimmenden Programms durch den Rundfunkempfänger (130) gemäß einem von dem ausgewählten Rundfunkempfänger (130) unterstützten Format benötigt werden; und
einen Meldeschritt (S918) des Meldens an einen Benutzer der Fernsteuerung, dass der Aufnahmereservationsdaten-Erzeugungsschritt (S916) erfolgreich aus dem elektronischen Programmführer, der in dem Programmerhalteschritt (S910) erhalten wurde, ein Rundfunkprogramm extrahiert hat, das mit dem Programmnamen oder dem Schlüsselwort, die in den von der separaten elektronischen Vorrichtung (100) in dem Datenerhalteschritt (S912) erhaltenen Daten enthalten sind, übereinstimmen.

10. Fernsteuerung nach Anspruch 2, implementiert als ein Mobiltelefon, eine transportierbare Spielmaschine, ein persönlicher digitaler Assistent, ein mobiler Personalcomputer, eine Uhr, ein Taschenrechner oder eine Maus.

## Revendications

1. Système de commande à distance comprenant un récepteur de signaux diffusés (130) et un dispositif de commande à distance (110) pour commander à distance le récepteur de signaux diffusés (130),
dans lequel le dispositif de commande à distance (110) comprend :
un moyen d'inscription dans lequel au moins un récepteur de signaux diffusés est répertorié ;
une unité d'obtention de données (318) qui obtient des données, au moyen de communications sans fil, en provenance d'une carte à circuit intégré (CI) ou d'une étiquette à circuit intégré (100) disposée sur un objet dans un espace public ;
une unité de stockage de données de réservation d'enregistrement (326) qui stocke des données de réservation d'enregistrement (340) dans un format pris en charge par un récepteur (130) sélectionné parmi ledit ou lesdits récepteurs répertoriés dans le moyen d'inscription du dispositif de commande à distance (110) ; et
un émetteur de données d'enregistrement (328) qui transmet les données de réservation d'enregistrement stockées au récepteur sélectionné (130) et
dans lequel le récepteur de signaux diffusés (130) comprend :
un récepteur de données de réservation d'enregistrement (412) qui reçoit les données de réservation d'enregistrement transmises depuis le dispositif de commande à distance (110) ;
une unité de réservation d'enregistrement (414) qui fait une réservation pour enregistrer en fonction des données de réservation d'enregistrement ; et
un enregistreur (418) qui reçoit et enregistre des signaux diffusés, en fonction de la réservation pour enregistrer,
dans lequel le dispositif de commande à distance (110) comprend :
une unité d'obtention de programme (314) qui obtient un guide de programme électronique ;
un générateur de données de réservation d'enregistrement (322) qui extrait, du guide de programme électronique, un programme correspondant à un nom de programme, ou à un mot-clé, inclus dans les données obtenues et qui génère des données de réservation d'enregistrement nécessaires pour la réservation d'un enregistrement du programme correspondant au moyen dudit récepteur sélectionné (130) en fonction d'un format pris en charge par ledit récepteur (130) ; et
une unité de rapport (324) configurée pour rapporter à un utilisateur du dispositif de commande à distance que le générateur de données de réservation d'enregistrement (322) a extrait avec succès du guide de programme électronique obtenu par l'unité d'obtention de programme (314) un programme diffusé qui correspond audit nom de programme, ou mot-clé, inclus dans les données obtenues du dispositif électronique distinct (100) au moyen de l'unité d'obtention de données (318) au moyen d'une communication sans fil.

2. Dispositif de commande à distance (110) pour commander à distance un récepteur (130) qui reçoit et enregistre des signaux diffusés, le dispositif de commande à distance (110) comprenant :
un moyen d'inscription dans lequel au moins un récepteur de signaux diffusés est répertorié ;
une unité d'obtention de données (318) qui obtient des données, au moyen de communications sans fil, en provenance d'une carte à circuit intégré (CI) ou d'une étiquette à circuit intégré (100) disposée sur un objet dans un espace public ;
une unité de stockage de données de réservation d'enregistrement (326) qui stocke des données de réservation d'enregistrement (340) dans un format pris en charge par un récepteur (130) sélectionné parmi ledit ou lesdits récepteurs répertoriés dans le moyen d'inscription du dispositif de commande à distance ;
un émetteur de données de réservation d'enregistrement (328) qui transmet les données de réservation d'enregistrement stockées au récepteur de signaux diffusés (130),
une unité d'obtention de programme (314) qui obtient un guide de programme électronique ;
un générateur de données de réservation d'enregistrement (322) qui extrait, du guide de programme électronique, un programme correspondant à un nom de programme, ou à un mot-clé, inclus dans les données obtenues et qui génère des données de réservation d'enregistrement nécessaires pour la réservation d'un enregistrement du programme correspondant au moyen du récepteur de signaux diffusés (130) en fonction d'un format pris en charge par ledit récepteur (130) ; et
une unité de rapport (324) configurée pour rapporter à un utilisateur du dispositif de commande à distance que le générateur de données de réservation d'enregistrement (322) a extrait avec succès du guide de programme électronique obtenu par l'unité d'obtention de programme (314) un programme diffusé qui correspond audit nom de programme ou audit mot-clé inclus dans les données obtenues du dispositif électronique distinct (100) au moyen de l'unité d'obtention de données (318) au moyen d'une communication sans fil.

3. Dispositif de commande à distance selon la revendication 2, comprenant en outre :
un dispositif d'affichage (330) ; et
un sélecteur de programme (320) qui affiche sur le dispositif d'affichage une pluralité de noms de programme ou une pluralité de mots-clés inclus dans les données obtenues de telle sorte qu'un utilisateur soit autorisé à sélectionner l'un des noms de programme ou l'un des mots-clés,
dans lequel le générateur de données de réservation d'enregistrement génère les données de réservation de programme en extrayant un programme correspondant au nom de programme, ou au mot-clé, sélectionné.

4. Dispositif de commande à distance selon la revendication 3, dans lequel le sélecteur de programme permet en outre à l'utilisateur de sélectionner un programme lorsqu'une pluralité de programmes ont été extraits par le générateur de données d'enregistrement.

5. Dispositif de commande à distance selon la revendication 2, comprenant en outre :
un dispositif d'affichage (330) ; et
un sélecteur de données de réservation d'enregistrement (332) qui affiche sur le dispositif d'affichage les données de réservation d'enregistrement stockées dans l'unité de stockage de données d'enregistrement de telle sorte qu'un utilisateur soit permis à sélectionner des données de réservation d'enregistrement,
dans lequel l'émetteur de données de réservation d'enregistrement transmet les données de réservation d'enregistrement sélectionnées.

6. Dispositif de commande à distance selon la revendication 2, dans lequel les communications sans fil sont réalisées en fonction de la norme de communication en champ proche.

7. Dispositif de commande à distance selon la revendication 2, dans lequel les données de réservation d'enregistrement sont transmises depuis le dispositif de commande à distance (110) au récepteur de signaux diffusés (130) en fonction d'un protocole IrDA.

8. Programme pour commander à distance un récepteur de signaux diffusés (130) qui reçoit et enregistre des signaux diffusés,
le programme contraignant un ordinateur à fonctionner comme :
un moyen d'inscription dans lequel au moins un récepteur de signaux diffusés est répertorié ;
une unité d'obtention de données (318) qui obtient des données, au moyen de communications sans fil, en provenance d'une carte à circuit intégré (CI) ou d'une étiquette à circuit intégré (100) disposée sur un objet dans un espace public ;
une unité de stockage de données de réservation d'enregistrement (326) qui stocke des données de réservation d'enregistrement (340) dans un format pris en charge par un récepteur (130) sélectionné parmi ledit ou lesdits récepteurs répertoriés dans le moyen d'inscription du dispositif de commande à distance ;
un émetteur de données de réservation d'enregistrement (328) qui transmet les données de réservation d'enregistrement stockées au récepteur de signaux diffusés (130),
une unité d'obtention de programme (314) qui obtient un guide de programme électronique ;
un générateur de données de réservation d'enregistrement (322) qui extrait, du guide de programme électronique, un programme correspondant à un nom de programme, ou à un mot-clé, inclus dans les données obtenues et qui génère des données de réservation d'enregistrement nécessaires pour la réservation d'un enregistrement du programme correspondant au moyen du récepteur (130) en fonction d'un format pris en charge par ledit récepteur (130) ; et
une unité de rapport (324) configurée pour rapporter à un utilisateur du dispositif de commande à distance que le générateur de données de réservation d'enregistrement (322) a extrait avec succès du guide de programme électronique obtenu par l'unité d'obtention de programme (314) un programme à diffuser qui correspond audit nom de programme, ou mot-clé, inclus dans les données obtenues du dispositif électronique distinct (100) au moyen de l'unité d'obtention de données (318) au moyen d'une communication sans fil.

9. Procédé de commande à distance pour commander à distance un récepteur de signaux diffusés (130) qui reçoit et enregistre des signaux diffusés, le procédé de commande à distance comprenant :
une étape d'obtention de données (S912) consistant à obtenir des données, au moyen de communications sans fil, en provenance d'une carte à circuit intégré (CI) ou d'une étiquette à circuit intégré (100) disposée sur un objet dans un espace public ;
une étape d'inscription consistant à inscrire au moins un récepteur de signaux diffusés ;
une étape de stockage de données de réservation d'enregistrement (S926) consistant à stocker des données de réservation d'enregistrement dans un format pris en charge par un récepteur (130) sélectionné parmi ledit ou lesdits récepteurs inscrits au cours de l'étape d'inscription ;
une étape d'émission de données de réservation d'enregistrement (S928) consistant à transmettre les données de réservation d'enregistrement stockées au récepteur sélectionné (130),
une étape d'obtention de programme (S910) consistant à obtenir un guide de programme électronique ;
une étape de génération de données de réservation d'enregistrement (S916) consistant à extraire, du guide de programme électronique, un programme correspondant à un nom de programme, ou à un mot-clé, inclus dans les données obtenues et à générer des données de réservation d'enregistrement nécessaires pour la réservation d'un enregistrement du programme correspondant au moyen du récepteur de radiodiffusion (130) en fonction d'un format pris en charge par ledit récepteur sélectionné (130) ; et
une étape de rapport (S918) consistant à rapporter à un utilisateur du dispositif de commande à distance que l'étape de génération de données de réservation d'enregistrement (S916) a extrait avec succès du guide de programme électronique obtenu au cours de l'étape d'obtention de programme (S910) un programme qui sera diffusé est qui correspond audit nom de programme, ou mot-clé, inclus dans les données obtenues du dispositif électronique distinct (100) au cours de l'étape d'obtention de données (S912).

10. Dispositif de commande à distance selon la revendication 2, mis en oeuvre sous la forme d'un téléphone cellulaire, d'une machine de jeu portable, d'un assistant numérique personnel, d'un ordinateur personnel mobile, d'une montre, d'un calculateur ou d'une souris.
